# EUROPEAN PATENT SPECIFICATION

(11) **EP 3 526 526 B1**
(45) Date of publication and mention of the grant of the patent: **05.08.2020**
(21) Application number: 17800564.1
(22) Date of filing: 12.10.2017
(51) Int. Cl.: F25D 3/12, F25D 29/00

(54) **ADJUSTING TEMPERATURE AT LOCATION WITHIN TARGET VOLUME**
EINSTELLUNG DER TEMPERATUR AN EINEM ORT INNERHALB DES ZIELVOLUMENS
AJUSTEMENT DE LA TEMPÉRATURE À UN EMPLACEMENT À L'INTÉRIEUR D'UN VOLUME CIBLE

(30) Priority: 12.10.2016 FI 20165775
(43) Date of publication of application: 21.08.2019
(73) Proprietor: Vakava Technologies Ltd Oy, 02150 Espoo (FI)
(72) Inventor: PITSINKI, Arto, 00500 Helsinki (FI); OJANPERÄ, Miika, 00500 Helsinki (FI)
(74) Representative: Berggren Oy, Helsinki & Oulu
(86) International application number: PCT/FI2017/050715
(87) International publication number: WO 2018/069576

(56) References cited:
- "Ruben's Tube Theory - Outreach, Chem Eng, Univ of Utah", youtube, 18 February 2011 (2011-02-18), page 2 pp., XP054978008, Retrieved from the Internet: URL:https://www.youtube.com/watch?v=BbPgy4 sHYTw [retrieved on 2018-01-11]
- ZDENEK BOCHN?CEK ET AL: "Thermal sensitive foils in physics experiments", PHYSICS EDUCATION, INSTITUTE OF PHYSICS PUBLISHING, BRISTOL, GB, vol. 49, no. 4, 8 July 2014 (2014-07-08), pages 419-424, XP020266447, ISSN: 0031-9120, DOI: 10.1088/0031-9120/49/4/419 [retrieved on 2014-07-08]

## Description

### Field

The present invention relates to adjusting temperature at a location within a target volume.

### Background

US5363670 discloses a self-contained cooler/freezer apparatus for carrying items in a frozen or refrigerated environment. The apparatus comprises an insulated container which is divided into two portions. The first portion is utilized for item storage and the second portion houses a pressurized coolant compartment for storing a dry ice. The pressurized coolant compartment comprises removable insulation panel. In essence, the pressurized coolant compartment is a controllable heat sink. Within a short period of time, the dry ice starts to sublimate, thereby forming cold gaseous carbon dioxide at a high pressure. The cold gaseous carbon dioxide is circulated throughout the insulated container via a solenoid actuated gas feed valve, thereby further cooling the first portion of the insulated container. A thermostatic controller activates the gas feed valve based upon temperature readings from thermocouples located within the first portion of the insulated container. A pressure relief valve is positioned within the insulated container to prevent the pressure within the insulated container from building beyond a maximum value. The sublimation of the dry ice causes pressure that is relieved outside the apparatus.

When cold gaseous carbon dioxide formed from sublimation of the dry ice is conducted out of the apparatus, the carbon dioxide cannot be used for cooling anymore.

If the gaseous carbon dioxide is unevenly distributed temperature differences within the insulated container may become unacceptable. The video "Ruben's Tube Theory - Outreach, Chem Eng, Univ of Utah", youtube, 18 February 2011 (2011-02-18)" discloses visulatization using a Rubens' tube. The document Zdeněk Bochníček et Al.: "Thermal sensitive foils in physics experiments", Physics Education, Institute of Physics Publishing, Bristol, GB, vol. 49, no. 4, 8 July 2014 (2014-07-08), pages 419-424, ISSN: 0031-9120 discloses the distribution of nodes and antinodes in a Rubens' tube visualized by thermal sensitive foil.

### Brief description of some embodiments

An object of the present invention is to alleviate at least part of the disadvantages identified above. The object of the present invention is achieved by the features of the independent claims. The dependent claims describe embodiments of the present invention.

According to an aspect there is provided an arrangement for adjusting temperature in at least one location within a target volume, comprising:
- one or more elements comprising sound inputs, gas inputs and gas outputs, said gas outputs arranged in a plurality of locations in the target volume;
- at least one temperature measurement device capable of determining a temperature of at least one of the locations;
- a sound wave generator for modifying gas output to the target volume by one or more sound waves fed into the sound inputs;
- a controller connected at least to the temperature measurement device and the sound wave generator to cause: generating one or more sound waves on the basis of the temperature obtained by the temperature measurement device such that the temperature at the location of temperature measurement is caused to decrease or increase towards a target temperature defined for the location.

Some embodiments provide controlling temperature in a target volume. Using sound waves to control gas output provides accurate and fast temperature control.

Some embodiments provide improved utilisation of the cooling capacity in dry ice. The sublimed dry ice is not directly relieved outside of the apparatus, but the sublimed dry ice is used to cool down solid dry ice. In this way the sublimation rate of the dry ice can be controlled.

### Brief description of the drawings

Embodiments are described with reference to the attached drawings in which
Figure 1 illustrates an apparatus according to an embodiment;
Figure 2 illustrates a temperature control system according to an embodiment;
Figure 3 illustrates an apparatus for rapid temperature regulation according to an embodiment;
Figure 4 illustrates a temperature control system for rapid temperature regulation according to an embodiment;
Figure 5 illustrates a method for temperature regulation phases according to an embodiment;
Figures 6a and 6b illustrate operation of convection element according to an embodiment;
Figure 7 illustrates a method of controlling heating and cooling phases according to an embodiment;
Figure 8 illustrates an inner wall structure for a transport container according to an embodiment;
Figure 9 is an exploded view of inner wall structure according to an embodiment;
Figure 10 illustrates an example of apparatus having doors according to an embodiment;
Figure 11 illustrates a temperature control system according to an embodiment;
Figures 12 and 13 illustrate examples of arrangements capable of adjusting temperature in at least one location within a target volume in accordance with some embodiments;
Figures 14 illustrate an example arrangement of tubular elements in accordance with at least one embodiment;
Figure 15 illustrates an example arrangement of planar elements in accordance with at least one embodiment;
Figure 16 illustrates an example of heat battery pack according to an embodiment;
Figure 17 illustrates an example of heat battery pack according to an embodiment;
Figure 18 illustrates a temperature regulated apparatus capable of outputting gas across a doorway;
Figure 19 illustrates a temperature regulated apparatus capable of outputting gas across the doorway, when the door is open; and
Figures 20, 21, 22, 23 and 24 illustrate examples arrangements of gas flows at the doorway according to embodiments.

### Detailed description

Various embodiments herein concern temperature regulation within target a volume. The temperature regulation may comprise cooling and/or heating a target volume by gas flow.

Some embodiments describe utilizing dry ice as coolant. Dry ice is the solid form of carbon dioxide (CO2). Dry ice sublimes at -78.5 °C at Earth atmospheric pressures. In sublimation of the solid dry ice, the dry ice is transitioned directly from a solid phase to a gas phase without passing through an intermediate liquid phase. In the following sublimed dry ice refers to dry ice in the gas phase. The extreme cold of the solid dry ice makes the solid dry ice dangerous to handle without protection due to burns caused by freezing (frostbite). While generally not very toxic, the outgassing from it can cause hypercapnia due to buildup in confined locations.

Some embodiments describe heating a target volume such as a storage container by heated gas.

In various embodiments, a temperature regulated apparatus utilizing dry ice as coolant and an arrangement comprising the temperature regulated apparatus utilizing dry ice as coolant may be referred to a dry-ice based cooling system. The dry-ice based cooling system may be provided with a heating system for heating a target volume for example a storage container. The heating system may comprise at least a heat battery pack and means for transferring heat from the heat battery pack to the target volume. Examples of the means comprise means for convective heat transfer and means for feeding heated gas. Various embodiments are now described with reference to the drawings, where the same or similar items are referenced by the same reference signs.

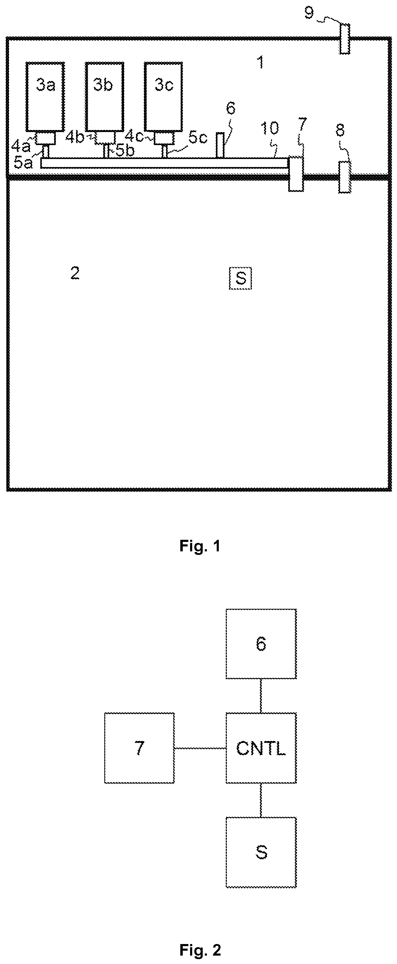

Figure 1 illustrates a temperature regulated apparatus according to embodiment. The temperature regulated apparatus may comprise at least one sealed container 3a, 3b, 3c. The sealed container may be referred as a dry ice container, when the sealed container includes dry ice. The sealed container may be referred to as a heat battery pack, when the sealed container is capable of heating. The temperature regulated apparatus may comprise one or more dry ice containers and/or heat battery packs. The dry ice container and/or the heat battery pack may be enclosed within another sealed 1 container that may be referred to as an enclosure. The dry ice container may be operatively connected to a storage container 2 for cooling the storage container to a target temperature or to a target temperature range by sublimed dry ice from the first container. The heat battery pack may be operatively connected to the storage container 2 for heating the storage container to a target temperature or to a target temperature range by heated gas from the heat battery pack. Accordingly the target temperatures and temperature ranges may be different for cooling and heating. The dry ice container may be operatively connected to the enclosure for conducting sublimed dry ice from the dry ice container to the enclosure when the target temperature or temperature range of the storage container is met. Accordingly, the dry ice may be used for cooling the enclosure and/or to the storage container by feeding the sublimed dry ice from the dry ice container to the enclosure and/or to the storage container. On the other hand heat from the heat battery pack may be used for heating the storage container by feeding gas heated by the heat battery pack to the storage container. In one example the gas may be air obtained from outside and heated by the heat battery pack. In cooling, the target temperature or temperature range may be met, when the current temperature within the storage container is at the target temperature or temperature range or less than the target temperature or temperature range. In heating, the target temperature or temperature range may be met, when the current temperature within the storage container is at the target temperature or temperature range or higher than the target temperature or temperature range. It should be appreciated that a mixture of heated gas and sublimed dry ice may be fed to the storage container for optimal temperature regulation. The flow of heated gas and the sublimed dry ice may be adjusted by valves.

Accordingly, at least one embodiment concerns a temperature regulated apparatus having one or more dry ice containers and a storage container forming a target volume, wherein sublimed dry ice may be fed from the dry ice containers to the storage container for cooling the storage container.

The dry ice may be first used in the temperature regulated apparatus as coolant for cooling the storage container 2 and after the target temperature or temperature range has been reached within the storage container, the dry ice may be used for cooling the dry ice container. Since the coolant fed to the enclosure is sublimed dry ice that has not been used for cooling the storage container, the coolant has a high cooling capacity and the coolant may efficiently cool down the container for dry ice and thereby the dry ice within the container. The cooling capacity of the coolant may be determined as the capability, for example measured in Watts, of removing heat. Cooling the container for dry ice provides that the sublimation rate of the dry ice may be controlled, e.g. reduced. The sublimation rate may be defined by weight of dry ice sublimed per a time unit, e.g. kg/h.

The sublimation of the dry ice may be caused by warming-up of the dry ice. The warming-up of the dry ice may be caused by the prevailing temperature in the environment of the temperature regulated apparatus being higher than the sublimation temperature of dry ice.

The target temperature or temperature range of the storage container may be defined by the type of items stored in the storage container. The items may be organic items that require storing in a specific temperature or temperature range such that their properties may be maintained during the time the items are stored the storage container. Examples of organic items comprise human organs, animal organs, living matter, bacteria growth and viral growth. It should be appreciated that the target temperature or temperature range may be represented by a pressure value or a pressure range within the storage container.

The dry ice container and the enclosure may be sealed such that the containers may hold a pressure caused by gas generated from sublimation of the dry ice. The dry ice container and the enclosure may be connected together such that they form a sealed entity for efficient transfer of sublimed dry ice between the storage container, the enclosure and the dry ice container within the enclosure.

The heat battery pack and the enclosure may be sealed such that the containers may hold a pressure caused by gas heated by the heat battery pack. The heat battery pack and the enclosure may be connected together such that they form a sealed entity for efficient transfer of heated gas between the storage container, the enclosure and the dry ice container within the enclosure.

In an embodiment, the temperature regulated apparatus may comprise a plurality of dry ice containers and/or heat battery packs 3a, 3b, 3c that are operatively connected to the storage container. The number of dry ice containers may be determined according to the needed cooling capacity. The needed cooling capacity may be determined on the basis of a plurality of factors comprising for example outside temperature of the cooling apparatus, target temperature or temperature range of the storage container and volume of the storage container. The number of heat battery packs may be determined according to the needed heating capacity in a similar manner.

In an embodiment, the enclosure 1 may have a door for removal of one or more dry ice containers or heat battery packs. Since the storage container is sealed, the dry ice containers and heat battery packs may be removed through the door without the sublimed dry ice or heated gas being released from the storage container.

In an embodiment the storage container 2 and the enclosure 1 may be connected such that, when a pressure within the storage container exceeds a threshold for pressure within the storage container, sublimed dry ice that has a reduced cooling capacity from cooling the storage container may be relieved from the storage container to the enclosure. In this way sublimed dry ice from the storage container may be used to heat up the sealed container holding the dry ice and increase the sublimation rate of the dry ice. The sublimed dry ice may be relieved through a relief valve 8 that connects the storage container and the enclosure.

In an embodiment the enclosure 1 may have a relief valve 9 that is caused to relieve sublimed dry ice from the enclosure and out of the cooling apparatus, when a threshold for pressure within the enclosure is exceeded. The relief valve may provide that accumulation of sublimed dry ice within the temperature regulated apparatus may be prevented.

Preferably the relief valves 8, 9 may be caused to relief the sublimed dry ice before the pressure reaches the triple-point of dry ice. In this way the pressure within the temperature regulated apparatus may be kept sufficiently low, i.e. below the triple point, to avoid the sublimed dry ice from transforming into liquid. The relief valves maybe caused to relieve sublimed dry ice on the basis of the pressure difference of the connected spaces. The relief valves also provide that the relieved sublimed dry ice flows only in one direction, thereby preventing relieved sublimed dry ice from returning.

In an embodiment the temperature regulated apparatus may comprise a fluid line 10 for connecting the dry ice container and/or heat battery pack, and the storage container 2, and a temperature controllable valve 7 arranged to regulate the flow of sublimed dry ice and/or heated gas to the storage container from the fluid line on the basis of the temperature within the storage container. The temperature controllable valve may enable and disable flow of the sublimed dry ice and/or the heated gas to the storage container such that the storage container may be maintained at the target temperature or the target temperature range.

The flow of the dry ice and/or heated gas may be enabled by opening the valve, and the flow of the dry ice and/or heated gas may be disabled by closing the valve. Accordingly, when the temperature controllable valve is open the sublimed dry ice and/or heated gas may flow to the storage container from the fluid line. When the temperature controllable valve is closed, the sublimed dry ice and/or heated gas cannot enter the storage container.

The temperature controllable valve may operate as a thermostat that may capable of sensing the temperature within the storage container by a sensor 'S'. The temperature controlled valve may be connected to the sensor 'S' for obtaining temperature measurements from inside of the storage container and for enabling or disabling the flow of the sublimed dry ice and/or heated gas into the storage container on the basis of the temperature measurements from the sensor. When the temperature within the storage container is above the target temperature, the flow of sublimed dry ice and/or heated gas into the storage container may be enabled and when the temperature within the storage container is at the target temperature or lower than the target temperature the flow of sublimed dry ice and/or heated gas into the storage container may be disabled.

In an embodiment a fluid line 10 may be connected to the enclosure by a valve 6 that may be controlled on the basis of at least one of a pressure within the fluid line and control of the flow of sublimed dry ice by a temperature controllable valve 7 arranged to regulate the flow of sublimed dry ice to the storage container. When the pressure within the fluid line exceeds a threshold for pressure, the valve 6 may be controlled to open and allow the sublimed dry ice to flow to the enclosure 1. The threshold pressure may be defined on the basis of the amount of dry ice and with respect to a cooling need of the storage container 2.

The cooling need may be determined on the basis of whether the storage container is at the target temperature or target temperature range. The cooling need causes the control of the temperature controlled valve. When the storage container is not at the target temperature or the target temperature range, the temperature controllable valve 7 arranged to regulate the flow of sublimed dry ice to the storage container from the fluid line may be opened, and when the storage container is at the target temperature or the target temperature range, the storage container does not need to be cooled and the temperature controllable valve may be closed. Accordingly, the valve 6 may be arranged to open when the temperature controllable valve is closed and the threshold for pressure within the fluid line is exceeded. In this way the sublimed dry ice is may be conducted to the enclosure for cooling the dry is container without further cooling the storage container.

On the other hand, the valve 6 may be closed if the threshold for pressure within the fluid line is not exceeded and/or when the temperature controllable valve is open 7. Accordingly, the fluid line may hold sublimed dry ice to be fed to the storage container for cooling the storage container, and on the other hand if there is no need for cooling the storage container the sublimed dry ice may be conducted to the enclosure for cooling down the dry ice container such that the sublimation rate of the dry ice may be reduced.

The connections between the dry ice container, heat battery pack, the storage container and the enclosure may be provided by means for conducting sublimed dry ice and/or heated gas. Examples of such means comprise a fluid line 10, a fluid passage and a fluid duct and a fluid hose. The means for conducting sublimed dry ice and/or heated gas may be controllable to provide operative connections between the dry ice container, heat battery pack, the storage container and the enclosure. The operative connections may allow enabling and disabling the flow of sublimed dry ice and/or heated gas between the dry ice container or heat battery pack and the storage container, and between the dry ice container and the enclosure. The control of the conduction of the dry ice and/or heated gas may be provided by one or more valves 5a, 5b, 5c, 6, 7, 8 that may be opened for enabling flow of sublimed dry ice and/or heated gas, and closed for disabling flow of sublimed dry ice. The opening and closing of the valves may be controlled by pressure of the sublimed dry ice, heated gas and/or temperature of the storage container.

In an example of controlling a valve by pressure of the sublimed dry ice and/or heated gas, the valve may be manually set a threshold pressure. When the threshold pressure is met, the valve may be opened and if the threshold pressure is not met, the valve may be closed. The threshold pressure may be set such that the storage container may be maintained in the target temperature or temperature range. It should be appreciated that also magnetic valves may be used. The magnetic valve may be caused to open and close on the basis of the current temperature within the storage container and a result of the comparison of the current temperature with the target temperature or with the target temperature range. The current temperature may be measured by sensor 'S'. On the other hand, and particularly, when the sublimed dry ice is not conducted to the storage container the dry ice may be conducted to the enclosure for cooling the dry ice container. However, once the storage container needs cooling, the cooling of the dry ice container is topped and the sublimed dry ice is conducted to the storage container. The cooling need of the storage container may be determined on the basis of the target temperature or target temperature range not being met in the storage container.

In an embodiment one or more dry ice containers and/or heat battery packs may be connected to the fluid line 10 by a quick-release coupling 4a, 4b, 4c and a back-pressure valve 5a, 5b, 5c. The back-pressure valve 5a, 5b, 5c provides that sublimed dry ice and/or heated gas discharged from the dry ice container or heat battery pack does not return to the dry ice container or the heat battery pack and the sublimed dry ice and/or heated gas may be kept within the fluid line, when the dry ice container or heat battery packs is released e.g. when being replaced. Accordingly, the back-pressure valve and the quick-release coupling may form a part of the fluid line 10. In this way the storage container may be cooled down by the sublimed dry ice preserved within the fluid line after the dry ice container is disconnected from the fluid line, or respectively heated by the heated gas preserved within the fluid line after the heat battery pack is disconnected.

In an embodiment, components of the temperature regulated apparatus that generate heat may be installed within the enclosure 1. In this way the heat generated from the components may be used to increase the sublimation rate of the dry ice. In one example, one or more parts of the temperature control system of Figure 2 may be installed to the enclosure. The temperature control system may comprise magnetic valves that may be opened by electric current that cause generation of heat in the valve. Heat may be generated, for example, when the temperature controllable 7 valve is a magnetic valve and electric current is fed to the valve for opening the valve. Thanks to the location of the temperature controllable valve within the enclosure, the heat generated by the temperature controllable valve may be used to increase the sublimation rate of the dry ice. In this way production of sublimed dry ice may be increased for further cooling of the storage container. Then, when the target temperature of the storage container has been reached the temperature controllable valve may be closed by cutting-off the current. In this position, the temperature controllable valve does not generate heat and the sublimation rate of the dry ice may be reduced. Further reduction of the sublimation rate may be achieved by conducting the sublimed dry ice directly to the enclosure from the fluid line via valve 6.

Figure 2 illustrates a temperature control system according to an embodiment. The temperature control system may be used to control flow of sublimed dry ice and/or heated gas into the storage container 2 or into the enclosure 1 or both the storage container and the enclosure in the embodiments described herein. The temperature control system is now described with reference to same or corresponding items in Figure 1. The temperature control system may comprise one or more temperature controllable valves 6, 7, a temperature sensor 'S' and a controller 'CNTL' connected to the sensor and valves such that the valves may be opened and closed on the basis of the measurements of the sensor. The sensor 'S' may be arranged within the storage container to obtain temperature measurements for controlling the valve. The temperature controlled valve may operate as a thermostat that may sense the temperature within the storage container by the sensor and enables and disables flow of the sublimed dry ice and/or heated gas to the storage container such that the storage container may be maintained at the target temperature or the target temperature range.

The units of the temperature control system in Figure 2 may be implemented as single units or the units may be combined into larger units. In one example, the temperature controllable valve 7 may include the controller 'CNTL'. The connection between the units in Figure 2 may be electrical connections by electrical wires for example. Accordingly, the valves in Figure 2 may be magnetic valves controlled by electric current from the controller.

The controller may be a processor, microcontroller or a Field Programmable Gate Array (FPGA) for example. The controller may have a memory for storing a computer program for execution by the controller. The controller and the memory may form processing means for carrying out an embodiment described herein. The processing means may be a computer or a part of computer.

In an embodiment there is provided a computer program comprising computer program code for execution on a computer to cause one or more functionalities according to an embodiment, when said product is run on a computer. The computer program may be embodied on a computer -readable storage medium.

In an embodiment there is provided a computer program product for a computer, comprising a computer program according to an embodiment.

An embodiment concerns a computer program embodied on a computer -readable storage medium, the computer program comprising program to execute a process comprising a method according an embodiment.

When the temperature within the storage container is at the target temperature or the temperature range, the temperature controllable valve 7 may be closed such that sublimed dry ice and/or heated gas cannot flow to the storage container. When the temperature within the storage container is higher than the target temperature or temperature range the temperature controllable valve 7 may be opened such that sublimed dry ice may flow to the storage container for cooling the storage container. When the temperature within the storage container is lower than the target temperature or temperature range the temperature controllable valve 7 may be opened such that heated gas may flow to the storage container for heating the storage container. It should be appreciated that instead or additionally to using a temperature sensor, a pressure sensor may be used, whereby the pressure measured by the pressure sensor may be used for controlling the valve in a similar manner as the measured temperature.

In the following, embodiments for rapid temperature regulation are described. The temperature regulation may comprise heating and/or cooling a target volume, for example a storage container. The above described embodiments and one or more features described therein may be implemented in the following embodiments for rapid temperature regulation for obtaining explicit or implicit advantages described above, and for implementing the embodiments. It should be appreciated that some features described below may be implemented in the above embodiments for obtaining explicit or implicit advantages in the above embodiments.

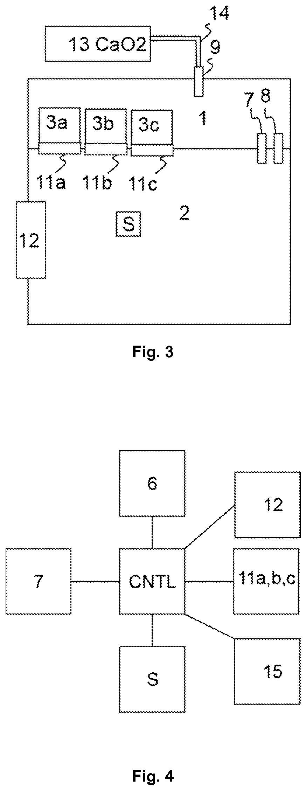

Figure 3 illustrates an apparatus for rapid temperature regulation according to an embodiment. The apparatus may comprise one or more heat sources and/or coolant sources 3a, 3b, 3c. Examples of the coolant sources comprise dry ice containers. Examples of the heat sources comprise a heat battery pack. The heat sources and coolant sources may be enclosed within another sealed container 1, referred to as an enclosure. The coolant sources may be operatively connected to a storage container 2 for cooling the storage container to a target temperature or to a target temperature range by sublimed dry ice from the at least one dry ice container 3a, 3b, 3c for dry ice, and said apparatus comprising at least one convection element 11a, 11b, 11c for convective heat transfer from the storage container 2 to dry ice within the dry ice containers. Accordingly a convection element 11a, 11b, 11c may be arranged between the dry ice in the dry ice container and the storage container. The heat sources may be operatively connected to the storage container 2 for heating the storage container to a target temperature or to a target temperature range by heated gas from the at least one heat battery pack 3a, 3b, 3c, and said apparatus comprising at least one convection element 11a, 11b, 11c for convective heat transfer from the heat battery pack to the storage container 2. The rapid temperature regulation apparatus comprises a fluid flow control element 7 for controlling flow of sublimed dry ice and/or heated gas into the storage container, and at least one sensor arranged for measuring temperature within the storage container. Accordingly, the cooling capacity of the dry ice may be utilized to cool the storage container in at least two ways by controlling the flow of sublimed dry ice via the fluid flow control element to the storage container and controlling the heat transfer via the convection element. It is feasible that at least one or both of the flow of sublimed dry ice and convective heat transfer are used at a time. On the other hand, the heating capacity of the heat battery pack may be utilized to heat the storage container in at least two ways by controlling the flow of heated gas via the fluid flow control element to the storage container and controlling the heat transfer via the convection element. It is feasible that at least one or both of the flow of heated gas and convective heat transfer are used at a time. Heating may be utilized particularly in environmental conditions, where outside air temperature decreases below the target temperature or target temperature range within the storage container.

In the apparatus for rapid temperature regulation, the connections for allowing flow of sublimed dry ice and/or heated gas to and/or from the units may be provided as described in the above embodiments described with reference to Figures 1 and 2 for enabling flow of sublimed dry ice and/or heated gas between various units. Accordingly, in the apparatus for rapid temperature regulation connections for flowing sublimed dry ice and/or heated outside air may be provided by one or more or a combination of a fluid line, a valve, a relief valve, a temperature controllable valve. It should be appreciated that a valve may be referred to as a fluid flow control element.

The fluid flow control element may be controllable to enable and disable flow of the sublimed dry ice and/or heated outside air to the storage container from the dry ice container or the heat battery pack. The fluid flow control element may be a valve, for example a temperature controllable valve. The fluid flow control element may be controlled by a controller of a temperature control system.

The convection element for heat transfer between the dry ice container and the storage container may be capable of conducting heat between the storage container and the dry ice in the dry is container without flow of sublimed dry ice to the storage container. A convection element for a dry ice container may have at least two surfaces, one of which is connected to dry ice and one of which is connected to the fluid inside the storage container for transferring heat from the storage container to the dry ice. The convection element for dry ice container may cause rapid cooling of the fluid next to the convection element, which causes convection in the storage container. In convection within the storage container, the fluid within the storage container is moved by the temperature difference of the fluid cooled down by the convection element and the fluid at a higher temperature in the storage container. In one example, the fluid in the storage container is the warmer the longer the distance to the convection element is, whereby in convection, fluid cooled down by the convection element is moved away from the convection element and warmer fluid is moved towards the convection element. The fluid in the storage container may be gas, for example air, sublimed dry ice, air and their mixture.

The convection element for heat transfer between the storage container and the heat battery pack may have at least two surfaces, one of which is connected to cartridges within the heat battery pack and one of which is connected to the fluid inside the storage container for transferring heat from the cartridges to the storage container. The convection element for heat transfer between the storage container and the heat battery pack may cause rapid heating of the fluid next to the convection element, which causes convection in the storage container. The fluid in the storage container may be gas, for example air, sublimed dry ice, air and their mixture.

In an embodiment, the convection element 11a, 11b, 11c is arranged in a wall in the dry ice container or heat battery pack 3a, 3b, 3c and the storage container has a receptacle for receiving the wall for transferring heat by the convection element in the wall positioned in the receptacle. In this way the convection element may be brought into contact with the fluid inside the storage container.

In an example, the convection element may be formed in a wall of the dry ice container or heat battery pack 3a, 3b, 3c. The dry ice within the dry ice container may rest on the convection element that may transfer heat from the storage container to the dry ice. On the other hand, the cartridges within the heat battery pack may be connected to the convection element that may transfer heat from the cartridges to the fluid inside the storage container. The wall of the storage container may comprise holes that each serve as a receptacle for a dry ice container and/or a heat battery pack. Accordingly, dry ice containers and/or heat battery packs may be received in the holes. The dry ice containers and/or heat battery packs positioned in the holes may be sealed such that fluids may not flow through the holes between the storage container and the dry ice container. Seals may be provided on either the dry ice container and/or heat battery to avoid the leakage of fluid through the holes.

In one implementation example, the surface of the convection element connected to the dry ice may be a surface directed upwards and the surface connected to the fluid within the storage container may be a surface directed downwards. Accordingly, the dry ice may be supported on the surface directed upwards.

The convection element may be of suitable material and structure for conducting heat. Examples of the suitable materials comprise metals, such as steel, aluminium and copper. Examples of the suitable structures comprise structures that prevent flow of gas such as a sheet.

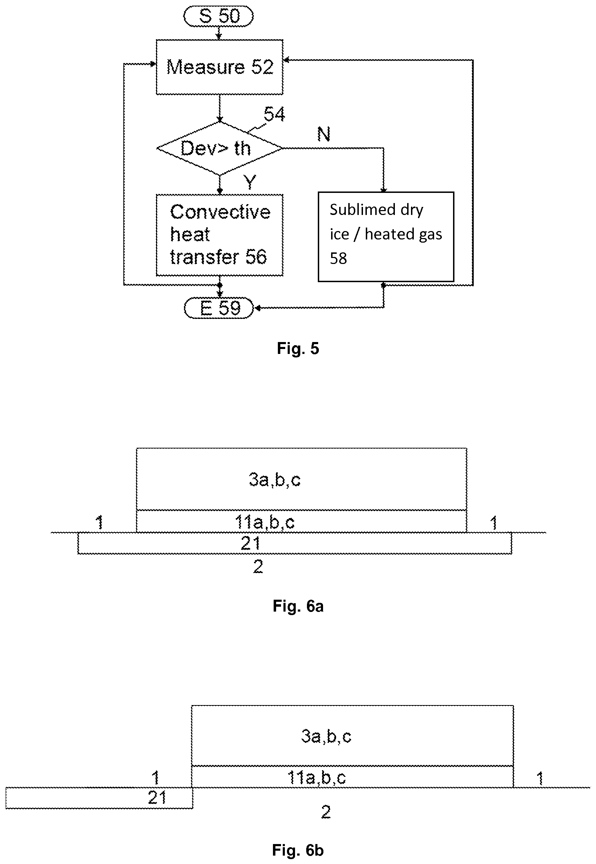

Figures 6a and 6b illustrate operation of convection element according to an embodiment. In Figures 6a and 6b, the convection element may be controllable to enable and disable the conduction of heat. In Figure 6a the conduction of heat is disabled by the convection element. In Figure 6b the conduction of heat is enabled by the convection element. The convection element may comprise a part 21 that is movable between a closed position illustrated in Figure 6a and an open position illustrated in Figure 6b. The convection element may be positioned in a hole in the storage container, for example. In the following the part 21 will be referred to as door. In the open position of the door the fluid within the storage container is connected to the convection element and heat may be transferred from the fluid inside storage container to the dry ice in the dry ice container, or heat may be transferred from the heat battery pack to the fluid inside the storage container. Accordingly, heat conduction may be enabled in the open position of the door. In the closed position of the door the fluid within the storage container is separated from the convection element. Accordingly, in the closed position the fluid is not in contact with the convection element and heat conduction by the convection element is disabled.

The door may be movable between the closed position and the open position for example by an electric motor that may be controlled by a controller of a temperature control system. In this way the temperature control system may control to enable or disable convective heat transfer.

Referring to Figure 3, in an embodiment, in the apparatus for rapid temperature regulation, the enclosure 1 has a relief valve 9 that is caused to relieve sublimed dry ice from said enclosure 1 and out of the apparatus and a CaO₂ container 13 is connected to the relief valve 9 for capturing sublimed dry ice consumed in the cooling phases. The connection 14 between the apparatus for rapid temperature regulation and the CaO₂ container may be releasable such that the CaO₂ container may be replaced. The connection may comprise quick release connector or a fluid line having at least one quick release connector for releasable connection of the CaO₂ container. The CaO₂ container contains CaO₂ that reacts with the carbon dioxide from the sublimed dry ice. The reaction of the carbon dioxide from the sublimed dry ice and the CaO₂ may be expressed as follows:

CaO₂ + CO₂ = CaCO₃ + O₂ (1).

Accordingly, the sublimed dry ice input to the CaO₂ container may be captured by the CaO₂ container into Calcium Carbonate, CaCO₃, and Oxygen. In this way the sublimation of the dry ice does not increase the level of carbon dioxide outside of the apparatus. The level of carbon dioxide is important in many environments, where people are present, since a too high level of carbon dioxide in the air may cause some people feel drowsy and even suffocation of people. Moreover, since the carbon dioxide is captured, there are no carbon dioxide emissions from the apparatus due to sublimation of the dry ice.

It should be appreciated that although the CaO₂ container is described with reference to the apparatus for rapid temperature regulation in Figure 3, the CaO₂ container 13 may be connected to the apparatus described in Figure 1, where the temperature regulation of the storage container is performed without the rapid temperature control provided by the convective heat transfer.

Referring to Figure 3, in an embodiment, the apparatus for rapid temperature regulation may comprises a controllable vent 12 for heating the storage container 2 by free air flow from outside the storage container 2. The vent may be controlled to open and close. When the vent is open, air from outside the apparatus may enter the storage container through an opening in the vent. When the vent is closed, air from outside the apparatus may not enter the storage container through the opening. In the open position of the vent, the amount of air flow may be controlled as needed by setting the opening of the vent. The target temperature of the storage container may be lower or higher than the temperature outside the apparatus. The vent provides that air outside of the apparatus may be used to increase the temperature within the storage container. In this way the temperature within the storage container may be adapted quickly to changes in the target temperature and/or to a too low temperature within the storage container. The opening of the vent may be set to different positions comprising for example, the closed position, the open position, and at least one intermediate position between open position and closed position. The opening of the vent may be controlled to move to a specific position for example by an electric motor that may be controlled by a controller of a temperature control system. In this way the temperature control system may control to enable heating, disable heating and/or to adjust the amount of heating by the air from outside the storage container.

Referring to Figure 3, in an embodiment, in the apparatus for rapid temperature regulation, the at least one dry ice container 3a, 3b, 3c for dry ice is operatively connected to said enclosure 1 for conducting sublimed dry ice from the at least one dry ice container 3a, 3b, 3c for dry ice to said enclosure 1, when the target temperature of the storage container is met. Accordingly, similar to explained with Figure 1 above, in this way the dry ice may be first used as coolant for cooling the storage container 2 and after the target temperature or temperature range has been reached within the storage container, the dry ice may be used for cooling the dry ice container.

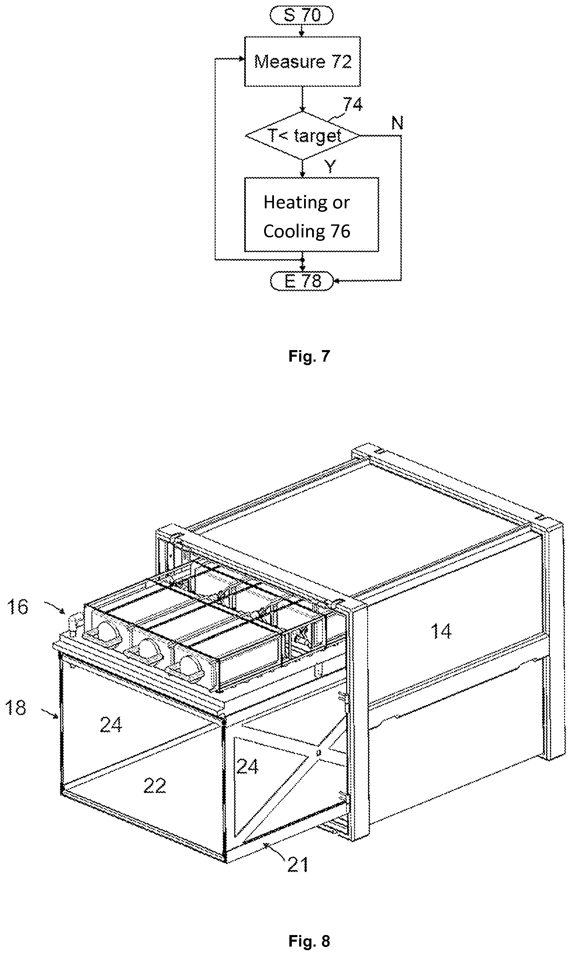

Figure 4 illustrates a temperature control system for rapid temperature regulation according to an embodiment. The temperature control system may be used in the apparatus for rapid temperature regulation illustrated in Figure 3. The temperature control system may be used for controlling convective heat transfer, heating of the storage container, flow of sublimed dry ice into the storage container 2, flow of heated gas to the storage container and/or flow of sublimed dry ice into the enclosure 1 in the embodiments described herein. The temperature control system may comprise a controllable vent 12 for heating the storage container and one or more convection elements 11a, 11b, 11c for convective heat transfer from the storage container to the dry ice and/or from heat battery packs to the storage container. The sensor 'S' may be arranged within the storage container to perform temperature measurements for controlling one or more of the fluid flow control element, e.g. a valve, the controllable vent and the convection element on the basis of the measured temperature within the storage container. The temperature measurements from the sensor 'S' may be fed to the controller. The controller may determine on the basis of the temperature measurements the current temperature in the storage container and/or a deviation of the current temperature from the target temperature of the storage container. The deviation may be used to determine whether the storage container should be cooled down or heated. Depending on the amount of deviation the temperature within the storage container may regulated by different temperature regulation phases comprising convective heat transfer by the convection element or by a flow of sublimed dry ice or heated gas to the storage container by the fluid flow control element. A more detailed explanation of the temperature regulation phases is provided below with Figure 5, and a more detailed explanation of the heating is provided below with Figure 7.

The controller may be connected to a user interface 15 for allowing a user to enter the target temperature and for the user to monitor the current temperature of the storage container. Accordingly, the user interface may be provided by a combination of user input means and user output means. Examples of the user input means comprise a button, a keypad, a keyboard and touch screen. Examples of the user output means comprise a display, a touch screen, an audio speaker, a lamp. The functionalities of the user interface may be provided by an application that is executed on a computer, for example a tablet computer or a smart phone. At least part of the functionalities of the controller or all the functionalities of the controller may be implemented in the application executed in the computer.

Figure 5 illustrates a method for different temperature regulation phases according to an embodiment. The method may be performed by a temperature control system of Figure 4 for example in the apparatus described in Figure 3. The temperature control system for rapid temperature regulation may be installed to the enclosure 1 similar to described with the temperature control system of Figure 2 in an embodiment. The method comprises regulating a storage container in a current temperature to a target temperature in at least two phases comprising a phase of convective heat transfer 56 and a phase of flowing 58 sublimed dry ice and/or heated gas to the storage container. In an embodiment the convective heat transfer may comprise transferring heat from the storage container to dry ice in the dry ice container. In an embodiment the convective heat transfer may comprise transferring heat from the heat batter pack to the storage container.

The method may start 50, when temperature measurements may be obtained from the storage container for controlling the cooling. The measurements may be obtained, when the temperature control system is operational. A deviation of the current temperature from the target temperature may be measured 52. The current temperature may be a measurement of the temperature inside the storage container. Preferably the current temperature represents the temperature in a defined time period or one or more time instants. The target temperature may be a fixed temperature or set by user via a user interface. The deviation of the current temperature from the target temperature may be compared 54 with a threshold value.

If 54 the deviation of the current temperature inside the storage container is higher than a threshold value for the deviation, the storage container may be cooled by convective heat transfer 56 from the storage container to dry ice, or heated by convective heat transfer 56 from a heat battery pack to the storage container. The convective heat transfer may be performed by a convection element.

In an embodiment, if 54 the deviation of the current temperature inside the storage container is not higher than a threshold value for the deviation, the storage container may be cooled by flowing 58 sublimed dry ice to the storage container, or heated by flowing 58 heated gas to the storage container. The flow of sublimed dry ice may be provided by a fluid flow control element.

The method may end 59 after the dry ice is consumed, heating capability of the heat battery pack is exhausted or the cooling of the container is stopped otherwise, for example by the user. In an embodiment sublimed dry ice consumed in the cooling phases may be conducted out of the storage container and captured in CaO2. The CaO2 container may be connected to the apparatus as described in Figure 3, for example.

It should be appreciated that the method steps 52, 54, 56 and 58 may be repeated and the measurement 52 may be performed at the same time with the cooling or heating, i.e. during the cooling or heating, in step 56 or step 58. Accordingly, the current cooling or heating phase in step 56 or 58 may be maintained until a new deviation is measured 52 that meet the condition for changing the cooling or heating phase to another cooling or heating phase. The cooling phases of the method allow cooling down the storage container rapidly to the target temperature or close to the target temperature by the convective heat transfer when the deviation is high. When the deviation is small, the cooling may be performed by the flow of sublimed dry ice. The heating phases of the method allow heating up the storage container rapidly to the target temperature or close to the target temperature by the convective heat transfer when the deviation is high. When the deviation is small, the heating may be performed by the flow of heated gas. The flow of sublimed dry ice and may be controlled for efficient utilisation of the cooling capacity as described in the embodiments with reference to Figures 1 and 2.

In an embodiment, the threshold value for the deviation is the same for applying 56 the convective heat transfer and the cooling 58 by flow of sublimed dry ice or heating by flow of heated gas. The same threshold value may allow determining the cooling or heating phase to be applied based on the measured deviation.

In an embodiment, when the current cooling phase is the phase of flowing 58 sublimed dry ice to the storage container, the threshold value for evaluating the deviation may be high and when the current cooling phase is the phase of convective heat transfer 56, the threshold for evaluating the deviation may be low. The different threshold values allow avoiding frequent changes from one cooling phase to another. Accordingly, the different thresholds allow avoiding a ping-pong effect between the cooling phases. The actual values for the threshold may be designed according to implementation.

In an embodiment, when the current heating phase is the phase of flowing 58 heated gas to the storage container, the threshold value for evaluating the deviation may be high and when the current heating phase is the phase of convective heat transfer 56, the threshold for evaluating the deviation may be low. The different threshold values allow avoiding frequent changes from one cooling phase to another. Accordingly, the different thresholds allow avoiding a ping-pong effect between the heating phases. The actual values for the threshold may be designed according to implementation.

Figure 7 illustrates a method of controlling heating and cooling phases according to an embodiment. The method may be performed by a temperature control system of Figure 4 for example in the apparatus described in Figure 3. The method allows cutting-off the cooling phases, whereby the storage container may be heated.

The method may start 70, when at least one cooling phase is applied. The cooling phase may be applied as described in step 56 or 58 in Figure 5.

During the cooling, a current temperature of the storage container may be measured 72. If 74 the current temperature of the storage container is below the target temperature, the storage container may be heated 76 by a free air flow from outside the storage container or by heated gas from the heat battery pack. The free air flow may be provided via a controllable vent in the storage container. The cooling phases applied to the storage container may be cut-off 76 during the heating. Accordingly, the convective heat transfer may be stopped and/or the flow of sublimed dry ice to the storage container may be stopped, when the storage container is heated. The dry ice container may be operatively connected to the enclosure for conducting sublimed dry ice from the dry ice container to the enclosure, when the target temperature of the storage container is met. Accordingly, since the current temperature is less than the target temperature, the target temperature is met and the sublimed dry ice may be conducted to the enclosure for cooling the dry ice container. The operative connection between the dry ice container and the enclosure may be provided by the fluid line 10 and the coupling 4a, 4b, 4c and the valve 6 in Figure 1, for example.

The method may end 78 if 74 the current temperature is at the target temperature or temperature range from the target temperature, or higher. Since the current temperature is not less than the target temperature or a temperature range, heating is not needed and the heating may be stopped. When the current temperature is higher than the target temperature or temperature range storage container may be cooled by convective heat transfer and/or flow of sublimed dry ice described in various embodiments herein.

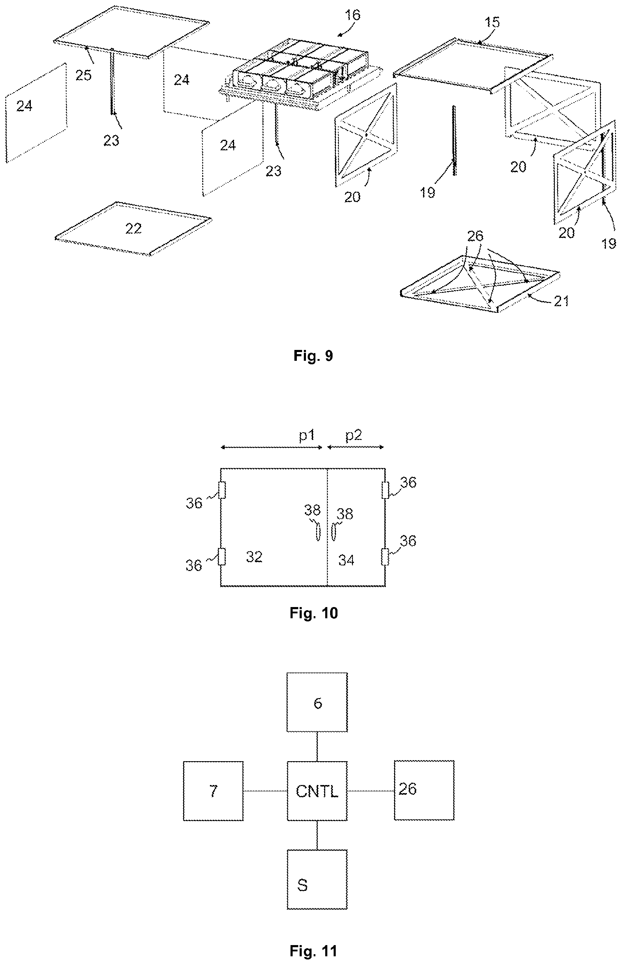

Inner wall structures according to embodiments are now explained in the following with reference to Figure 1 and Figure 8 that illustrates an inner wall structure for a transport container 14 according to an embodiment and with reference to Figure 9 that is an exploded view of inner wall structure according to an embodiment. In Figure 8, the inner wall structure is illustrated partially within the transport container. However, it should be appreciated that the dimensions of the inner wall structure are smaller than the dimensions of the transport container to allow the inner wall structure to be installed completely within the transport container. Accordingly, the inner wall structure may be capable of accommodating substantially the whole volume of the transport container when the inner wall structure is installed within the transport container. When the inner wall structure is installed and enclosed within the transport container, the transport container is capable of utilizing dry ice for adjusting the temperature within the transport container. When the inner wall structure of the transport container is enclosed within the transport container, the transport container substantially covers the inner wall structure from all sides such that the inner wall structure is protected against external contact, for example impacts.

In an embodiment the inner wall structure may comprise one or more parts of a temperature regulated apparatus described in an embodiment. Preferably the parts comprise one or more dry ice containers 3a, 3b, 3c and/or heat battery packs 3a, 3b, 3c and a storage container 2. Accordingly, the inner wall structure may comprise a temperature regulated apparatus described in the above embodiments that is adapted to accommodate substantially the whole volume of the transport container when installed within the transport container.

The inner wall structure may comprise a first portion 16 comprising at least one sealed container 3a, 3b, 3c for dry ice and/or a heat battery pack 3a, 3b, 3c, and a second portion 18 comprising a storage container 2. The at least one sealed container 3a, 3b, 3c for dry ice and/or heat battery pack 3a, 3b, 3c may be operatively connected to a storage container 2 for cooling the storage container to a target temperature or to a target temperature range by sublimed dry ice from the at least one sealed container for dry ice and/or by heated gas. In this way the transport container enclosing the inner wall structure may be capable of utilizing dry ice and/or heated gas for adjusting the temperature within the transport container.

In an example, the second portion 18 comprising a storage container 2 may comprise a support frame 15, 19, 20, 21 and cover parts 22, 23, 24, 25 capable of being installed on the support frame. The cover parts may provide thermal insulation such that the temperature within the storage container may be protected against the conditions prevailing outside the inner wall structure of the transport container and the conditions prevailing outside the transport container.

The support frame may be configured from side frames 20 for each side wall of the inner wall structure, a floor frame 21 and a top frame 15. The side frame, floor frame and the top frame may be adapted such that they may be attached together. The support frame may have frame adapters 19 for attaching side frames to each other, and side frames to floor frame and top frame. When attached together the support frame may form a frame for the storage container.

The cover parts may comprise a floor 22, a top cover 25 and side covers 24 and cover adapters 23 for attaching side covers to each other, and side frames to floor and top cover. The cover parts and the dry ice containers and/or heat battery packs may be installed on the support frame to form the portions of the inner wall structure. In this way items stored on the floor within the storage container may be supported by the support frame and the dry ice containers and/or heat battery packs may be supported above the storage container for utilizing dry ice and/or heated gas for adjusting the temperature within the transport container. Thanks to the arrangement of cover parts and the support frame, items place within the storage container may be measured by weight sensors positioned under the floor as will be described below in more detail.

The inner wall structure according to an embodiment may further comprise at least one sealed container 3a, 3b, 3c for dry ice that may be enclosed within another sealed container 1, and the at least one sealed container 3a, 3b, 3c for dry ice may be operatively connected to said another sealed container 1 for conducting sublimed dry ice from the at least one sealed container 3a, 3b, 3c for dry ice to said another sealed container 1, when the target temperature of the storage container is met. Accordingly, the dry ice may be enclosed within an enclosure.

In an embodiment the inner wall structure may have a support frame 21 on which a floor 22 of the storage container is resiliently installed and one or more weight sensors 26 may be positioned on the frame under the floor of the storage container for operating with the floor of the storage container for measuring weight of the contents of the storage container. The frame may comprise installation positions 27, e.g. holes, for installing the weight sensors to the frame. The resilient installation of the floor may transfer the weight of the items placed on the floor of the storage container such that the items and/or their weight may be detected by the weight sensors. The resilient installation may be provided by the material of the structure and/or material of the floor. The items positioned on the floor of the storage container may cause activation of the sensors, whereby presence of items may be detected within the storage container. The weight sensors may be capable of measuring weight, whereby each item placed within the storage container or removed from the storage container may cause a new measurement value. The measurement values may be applied in monitoring one or more of the following: a number of items within the storage container, total weight of the items within the storage container and weight of single items within the storage container.

In one example the support frame may have the form of a diagonal cross, like the shape of the letter X in Roman type. The arms for the diagonal cross extend diagonally over the cover part supported by the support frame. The weight sensor may be positioned away to one or more positions of the diagonal cross said positions comprising: arms of the cross, to middle of the cross. Preferably a weight sensor positioned in the arm of the cross away from the middle of the cross and the end of the arm. Possible locations for the weight sensor in the arms may be in the middle of the arm and towards the end of the arm away from the middle of the arm.

In an embodiment an inner wall structure according to an embodiment may be collapsible. In this way the volume needed by the inner wall structure, when the inner wall structure is collapsed may be small, whereby efficiency of storage and transportation of collapsed the inner wall structures may be provided.

In an example, the support frame may have the form of a diagonal cross, like the shape of the letter X in Roman type. The arms for the diagonal cross extend diagonally over the cover part supported by the support frame. The arms of the diagonal cross may be formed of parts that are interconnected movable for collapsing the sides of the inner wall structure. The support frames may have a locking mechanism for locking the arms of the diagonal cross and avoiding collapse of the support members.

In an embodiment a transport container may comprise the inner wall structure. The inner wall structure may be slidably interchangeable from the transport container. In this way the inner wall structure may be installed within the transport container and removed from the transport container by sliding movement. Sliding of the inner wall structure may be provided, when the inner wall structure has one or more skids that allow easy sliding in and/or out of the transport container. The material of the support frame and the transport container may be adapted to support the sliding. Accordingly, the surfaces of the support frame that is acting against the transport container may be adapted to support sliding between the transport container and the support frame.

It should be appreciated that the inner wall structure may not need separate skids, but the support frame of the inner wall structure may serve the purpose of the skids. Accordingly, particularly a portion 21 of the support frame for supporting the floor 22 may be used as skids.

In an embodiment the transport container may be a cargo container or a transport cabinet. A cargo container may be a standard intermodal freight container conventionally used in cargo ships for example. A transport cabinet may be a cabinet movable manually by personnel by pushing and pulling. Such transport cabinets are conventional for example in grocery shops, where temperature sensitive goods are received in the transport cabinets from trucks at loading ramp and thereafter moved between inside to the grocery shop for storage or directly to the sales area.

The transport container may be made of material capable of providing sufficient protection to the inner wall structure against external contact during transportation. The type of material and strength of the material may be adapted on the basis of the kind of transportation the container is utilized and the level of protection needed. For example when the transport container is utilized in sea transportation the transport container may be made of material conventionally used in standard intermodal freight containers. Accordingly it should be appreciated that the material may be for example plastic, composite, steel or stainless steel.

Figure 10 illustrates an example of an apparatus having doors according to an embodiment. The apparatus may be a temperature regulated apparatus described in an embodiment. The temperature regulated apparatus may have one or more doors. The doors may be opened and closed. In an open position, the doors may allow removal of contents within the temperature regulated apparatus and placing contents within the temperature regulated apparatus. The contents may be at least one or more dry ice containers, heat battery packs, storage containers and items for storing in storage containers. Accordingly, the door may provide access to one or more dry ice containers, heat battery packs, the storage container and items for storing within the storage container in the temperature regulated apparatus. In one example the doors are arranged in the enclosure for removal and installing one or more dry ice containers and/or heat battery packs. In another example the doors may be arranged in a transport container for removal and installing an inner wall structure. When the inner wall structure is installed within the transport container the doors provide accessing the inner wall structure within the transport container for example for the purpose of removing items from the storage container, storing items to the storage container and replacing dry ice containers. In a closed position, the door or cover may allow enclosing the contents within the temperature regulated apparatus. Accordingly doors provided on the transport container allow enclosing the inner wall structure within the transport container.

The door or cover may have more than one part 32, 34, which both may be opened and closed. The door parts may form double doors. Each of the door parts or cover parts may cover only a portion 'p1', 'p2' of the side of the transport container. In this way items may be removed and inserted into the storage container without opening the transport container all the way, whereby flow of outside air to the storage container may be hindered at least partially. The door parts may be substantially equally large such that they cover a substantially similar portion of the transport container. Preferably the door parts are dimensioned such that one 32 of the parts is larger than the other 34. In this way items within the storage portion may be accessed opening the smaller portion and flow of outside air to the storage container may be hindered more than if the parts were substantially equally large.

The door and door parts may be connected to the transport container by hinges 36 such that they are movable to the open position and closed position.

It should be appreciated that instead of doors a single cover or cover parts may be adapted with the transport container such that they may be removed from the transport container and installed to transport container for closing the transport container similar to the door and door parts. The cover and cover parts may be attached to the transport container by latches.

In an embodiment, the doors may have gripping portions 38, for example handles, for facilitating operating the doors to the open or closed position. The gripping portions may be arranged in a recess such that the surface of the transport container may be substantially flush.

Figure 11 illustrates a temperature control system according to an embodiment. With reference to Figures 1, 2, 9 and 11, the temperature control system may be capable of measuring weight of the contents of the storage container for controlling temperature by controlling flow of sublimed dry ice and or heated gas into the storage container 2 or into the enclosure 1 or both the storage container and the enclosure in the embodiments described herein.

The controller 'CNTL' may be connected to a weight sensor 26 such that the valves 6, 7 may be opened and closed on the basis of the measurements of the temperature sensor and the weight sensor. The weight sensor 26 may be positioned on the support frame 21 under the floor 22 of the storage container for operating with the floor of the storage container for measuring weight of the contents of the storage container.

The units of the temperature control system in Figure 11 may be implemented as single units or the units may be combined into larger units. The connections between the units in Figure 11 may be electrical connections by electrical wires for example.

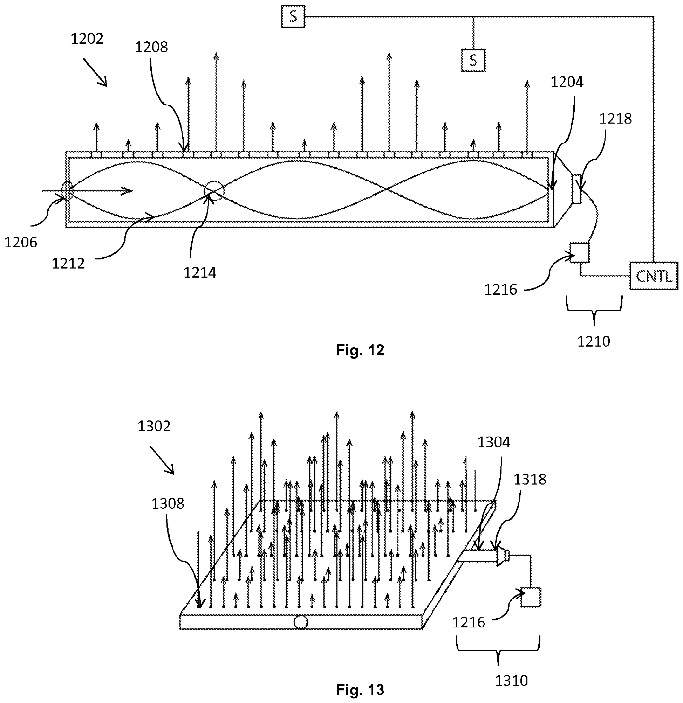

Figures 12 and 13 illustrate examples of arrangements capable of adjusting temperature in at least one location within a target volume in accordance with some embodiments. The arrangements comprise:
- one or more elements 1202, 1302 comprising one or more sound inputs 1204, 1304, gas inputs 1206 and gas outputs 1208, 1308, said gas outputs arranged in a plurality of locations in the target volume;
- at least one temperature measurement device 'S' capable of determining a temperature of at least one of the locations;
- a sound wave generator 1210, 1310 for modifying gas output to the target volume by one or more sound waves 1212 fed into the sound inputs 1204, 1304;
a controller 'CNTL' connected at least to the temperature measurement device 'S' and the sound wave generator to cause generating one or more sound waves on the basis of the temperature obtained by the temperature measurement device such that the temperature at the location of temperature measurement is caused to decrease or increase towards a target temperature defined for the location. The sound waves input to the elements cause gas within the elements to be controllably output from the elements such that the temperature in the locations within the target volume may adjusted.

In Figure 12 the sound wave is illustrated within a cross section of the element. Figure 13 shows a perspective view of the element.

The gas input 1206 is capable of receiving gas into the element. The gas input may be connected operatively to one or more dry ice containers 3a, 3b, 3c for receiving sublimed dry ice from the dry ice containers. Additionally or alternatively, the gas input may be connected operatively to one or more heat battery packs 3a, 3b, 3c for receiving heated gas from the heat battery packs. The gas input may be connected for example to a fluid line 10 in a temperature regulated apparatus described in an embodiment for receiving sublimed dry ice and or heated gas. The gas flow out of the fluid line may be regulated by a temperature controllable valve. The gas output 1208, 1308 is capable of letting gas out of the element. The gas input 1204, 1304 is capable of receiving gas into the element. In some embodiments, the gas output may also serve for letting sound waves out of the element. However, letting sound waves out of the element may not be needed.

In an embodiment, the arrangement may comprise a temperature regulated apparatus comprising a sound wave based gas distribution system. The sound wave based gas distribution system may be provided by the devices that cause controlling gas output to a target by sound waves. Accordingly, the sound wave based gas distribution system may comprise at least one or more elements 1202, 1302, at least one temperature measurement device 'S', a sound wave generator 1210, 1310 and controller 'CNTL' described above.

In an example, the target volume may be a storage container 2 in a temperature regulated apparatus described in an embodiment. However, it should be appreciated that the arrangement may be utilized in connection with other target volumes, where temperature regulation is required, such as ware houses.

The sound wave generator 1210, 1310 may be capable of generating audible on non-audible sound waves 1212. Preferably the sound waves are non-audible, thus not audible to human such that use of the arrangement is silent. On the other hand audible sound waves to human may be preferred for conveying information. Conveying information with the sound waves may be preferred for example for attracting attention of people using the arrangement or being otherwise present nearby the arrangement. In one example the conveyed information is an alert sound.

In an example the sound wave generator 1210, 1310 may comprise means for converting an electrical audio signal into a corresponding sound. The sound wave generator may comprise a loudspeaker 1218, 1318 connected to a frequency converter 1216, 1316. The frequency converter may control the loudspeaker to generate a sound wave having a frequency adapted to controllably output gas from the elements. Preferably the frequency of the sound wave may be determined on the basis of the dimension, e.g. length, of the element and locations of the outputs, where output of the gas is controlled.

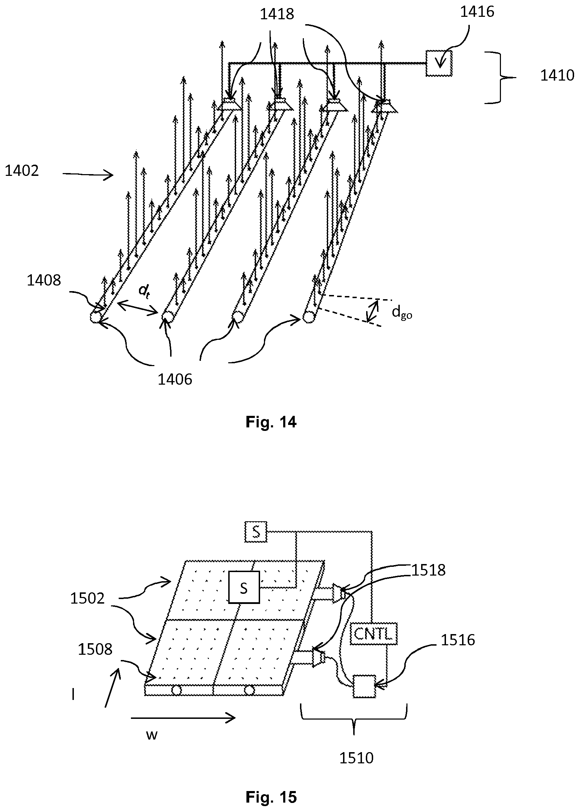

The elements may be capable of receiving pressurized gas via the gas inputs 1206. The gas may be sublimed dry ice from one or more dry ice containers connected to the elements by fluid lines. On the other hand the gas may be gas heated by one or more heat battery packs. The elements may of various shapes, for example tubular elements or planar elements described in Figures 14 and 15.

In an example the temperature measurement device, such as a temperature sensor, may be installed within the target volume close to the at least one location, where gas is output within the target volume.

In an embodiment a generated sound wave may have an amplitude node 1214at an output 1208 arranged at the at least one location or the generated sound waves have a combined amplitude node 1214 at an output arranged at the at least one location. An example of the sound wave may be a standing wave that may be designed according to the dimensions of the elements. The amplitude node at the output provides that the sound wave is silent at the output, whereby the gas may flow out of the element. The gas output from the element 1202, 1302 may be pressurized by both the element and the sound wave. An example of the sound wave may be a standing wave.

In an embodiment a sound wave 1212 may correspond to a gas output pattern. The sound wave may define a flow rate specific to an output. In Figure 12, the flow rates are illustrates by arrows extending from the gas outputs 1208. When gas is output via more than one output, each output may have its own flow rate. However, it should be appreciated that some flow rates may be the same. In this way the sound wave may define a gas output pattern. The gas output pattern may be designed according to the target volume such that temperatures in one or more locations in the target volume may be increased or decreased by feeding gas via the outputs according to the gas output pattern. It should be appreciated that it is viable that the gas output pattern is adapted such that some locations within the target volume may be in different temperatures or temperature ranges.

In an embodiment the arrangement may comprise a plurality of temperature measurement devices 'S' capable of determining temperatures of a plurality of locations within the target volume and the generated sound wave or sound waves have nodes at the outputs arranged at the locations. In this way temperature measurements may be obtained from the locations for regulating the temperature in the locations by controlling gas output to the locations by sound waves.

Figures 14 illustrate an example arrangement of tubular elements in accordance with at least one embodiment. The arrangement may be the arrangement described with Figure 12, with a plurality of elements that are tubular. At least one sound wave generator 1410 may be connected to sound inputs at ends of the tubular elements 1402 and gas outputs 1408 may be arranged in locations along the longitudinal direction of the tubular elements. Gas inputs 1406 may be arranged to opposite ends of the tubular elements with respect to the sound wave generators 1410. The sound wave generator may comprise one or more loud speakers 1418 and frequency converters 1416. The tubular elements may be arranged in parallel for example to one or more walls of a storage container 2. In this way gas flow may be output accurately in the area of the wall where the tubular elements are installed. The accuracy may be improved by reducing the distance dₜ between the tubular elements and by reducing the distance between the gas outputs d_{go}.

Figure 15 illustrates an example arrangement of planar elements 1502 in accordance with at least one embodiment. The arrangement may be the arrangement described with Figure 13, with a plurality of elements that are planar. Gas outputs 1508 of the planar elements may be arranged in locations extending in length 'l' and width 'w' direction on the surfaces of the elements, and sound wave generator 1510 may be connected to sides of the planar elements. The sound wave generator may comprise one or more loud speakers 1518 and frequency converters 1516. In the arrangement of planar elements, the planar elements 1502 may be arranged in parallel for example to one or more walls of a storage container 2. In this way gas may be output very accurately in the area of the wall, where the planar elements are installed. The accuracy may be improved by reducing the distance between the gas outputs.

In an embodiment, the planar elements 1302 comprise planar surfaces and the arrangement of planar elements comprises a plurality of sound wave generators that are spatially separated and connected to sides of different planar elements.

In an embodiment, an arrangement comprises a battery pack for generating heat, i.e. heat battery pack. The heat battery pack is operatively connected to the elements 1202, 1302, 1402, 1502 for feeding gas heated by the battery pack to the target volume. The heat battery pack may be connected to the elements by one or more fluid lines. One or more valves may be used for controlling the flow of heated gas. There may be more than one battery pack which may be connected to the element for feeding heated gas to the target volume.

In an embodiment, an arrangement comprises a temperature regulated apparatus having a dry ice container 3a, 3b, 3c, a storage container 2 forming a target volume, and sublimed dry ice is fed from the dry ice container to the storage container for cooling the storage container. In an example one or more fluid lines 10 are provided between the dry ice containers and the elements 1202, 1302, 1402, 1502 for feeding the sublimed dry ice to the storage container via the elements.

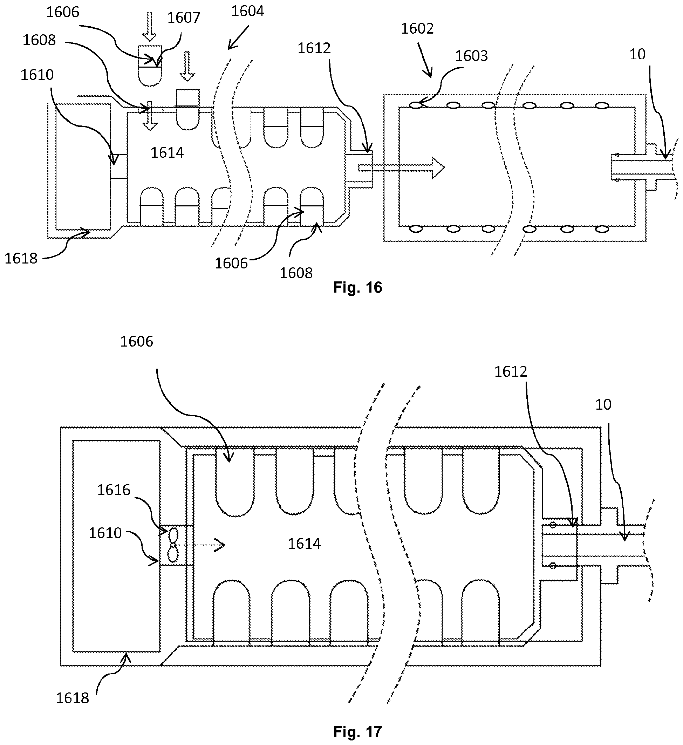

Figure 16 illustrates an example of heat battery pack according to an embodiment. The heat battery pack may comprise an outer cover 1602 capable of receiving a replaceable inner portion 1604, said inner portion comprising a plurality of cartridges 1606 each comprising CaO and water separated by separating means 1607. The cartridges may be inserted into the inner portion for loading or re-loading the heat battery pack as is indicated by arrows. In Figure 16 the outer cover and the replaceable inner portion are illustrated apart. The heat battery pack comprises breaking means 1603 capable of breaking the separating means such that the CaO is brought into contact with water when the cartridges are within the outer cover for generating heat by the chemical reaction of CaO and water. The replaceable inner portion that is apart from the outer cover may be inserted into the outer cover as illustrated by the arrow between the inner portion and the outer cover, such that the chemical reaction for generating heat may be caused. When the inner portion is out of the outer cover, the inner portion may be refilled with cartridges.

When the inner portion is within the outer cover, the breaking means 1603 may be capable of igniting the cartridges by damaging the separating means 1607 such that the CaO is brought into contact with water, whereby heat is generated. The breaking means may be an electromechanical device that may be capable exerting a mechanical force to the separating means controlled by an electric current. In an example the breaking means comprises a pin capable of being operated by an electric switch, whereby switch may cause the pin to damage the separating means controlled by an electric current. The separating means may be a thin film of material such as plastics.

In an embodiment, the replaceable inner portion 1604 comprises chambers for accommodating the cartridges, and the chambers have an upper opening 1608 through which heat generated from the cartridge is communicated to the outer cover for convective heat transfer from the battery pack. The upper opening may be an opening to the surface of the replaceable inner portion.

In an embodiment the replaceable inner portion 1604 comprises an input 1610 for receiving gas, e.g. outside air, or other fluid within the battery pack and an output capable of connecting directly or indirectly to a storage container for feeding the fluid from the input to the storage container via the output and a central duct 1614 of the replaceable inner portion. In an example the connection to the storage container may be provided by a fluid line in a temperature regulated apparatus. The gas received via the input may be air from outside the temperature regulated apparatus. The air may be heated by the chemical reaction for generating heated gas. The heated gas may be fed to the storage container for heating the contents therein. The input and output may be provided by corresponding openings.

In an embodiment the cartridges are arranged around a central duct 1614 of the replaceable inner portion such that the fluid fed from the input 1610 to the output 1612 is heated by the cartridges after the cartridges are ignited.

In an embodiment the replaceable inner portion 1604 comprises chambers for accommodating the cartridges and the chambers have bottom ends towards a central duct 1614 of the replaceable inner portion for heating the fluid fed from the input 1610 to the output 1612.

In an embodiment, the replaceable inner portion 1604 comprises a handle 1618 arranged remote from the output 1612. Since the handle is remote from the output of heated gas, the replaceable inner portion may be gripped safely.

An embodiment concerns an arrangement comprising a heat battery pack and a dry ice ice-based cooling system. The arrangement may be capable of performing method of Figure 7, where cooling is cut-off during heating 76. The arrangement may comprise a dry ice container 3a, 3b, 3c capable of feeding sublimed dry ice to a storage container 2, and at least one temperature sensor 'S' for sensing a temperature within the storage container; and a controller 'CNTL' connected to the temperature sensor, the heat battery pack and the dry-ice based cooling system to cause cutting-off feed of sublimed dry ice to the storage container, when a temperature within the storage container is below a desired temperature range or a temperature threshold, and igniting cartridges for heating the storage container by heat from the cartridges.

Figure 17 illustrates an example of heat battery pack according to an embodiment. The heat battery pack may be the battery pack described with of Figure 16. Referring to Figure 17 the input 1610 comprises a fan 1616 for causing a drift of fluid from the input 1610 to the output 1612. The fan may be operated by DC voltage provided by a battery. In this way the heat battery pack may cause a flow of heated gas for feeding the heated gas into a target volume in a temperature regulated apparatus.

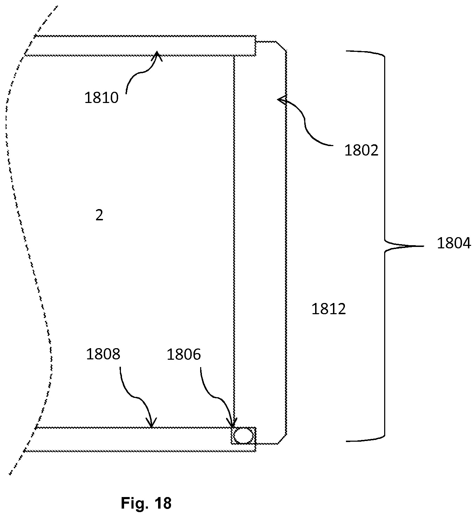

Figure 18 illustrates a temperature regulated apparatus capable of outputting gas across a doorway. The temperature regulated apparatus comprises a door 1802 providing access to a storage container 2, whereby the door is arranged to the doorway 1804 of the storage container. The door may be movable between a closed position and an open position. In Figure 18 the door is illustrated in the closed position. In the closed position, the door seals the temperature regulated apparatus such that gas, for example sublimed dry ice or heated gas, cannot flow out of the temperature regulated apparatus. Accordingly, the temperature regulated apparatus comprises guiding means 1806 for guiding sublimed dry ice or heated gas across the doorway in response to detecting opening of the door. The guiding means may be installed to an edge 1808 of the doorway and directed such that sublimed dry ice or heated gas is output towards an opposite edge 1810 located across the doorway. The guiding means may be controlled to cause guiding sublimed dry ice or heated gas across the doorway in response to detecting opening of the door.

In an embodiment an arrangement comprises a storage container 2 forming a target volume, a door 1802 arranged at a doorway 1804 of the storage container 2 for accessing goods within the storage container; and at least one of the elements 1202, 1302, 1402, 1502 has at least one output 1208, 1308 directed across the doorway 1804 such that sound waves 1212 generated by the sound wave generator 1210, 1310, 1410, 1510 are capable of causing gas output across the doorway 1804 in response to detecting opening of the door 1802. In an example, the opening of the door may be detected by a switch that may be coupled to a controller capable of controlling gas flow from dry ice containers and/or heat battery packs. The arrangement may comprise a temperature regulated apparatus provided with doors and illustrated in Figure 10, for example.

In an embodiment, the temperature regulated apparatus has at least two operation modes comprising a door closed mode and a door open mode, and in the door closed mode a first flow pattern is applied for guiding the sublimed dry ice or heated gas, and in the door open mode a second flow pattern is applied for guiding the sublimed dry ice or heated gas.

In an example, applying the flow pattern in the door open mode may comprise guiding all the sublimed dry ice or heated gas across the doorway 1804. In an example, applying the flow pattern in the door closed mode may comprise guiding the sublimed dry ice or the heated gas substantially evenly within the storage container 2. In an example, the temperature regulated apparatus comprises more than one guiding means, one of which comprises the guiding means for guiding sublimed dry ice or heated gas across the doorway 1804, and at least one other guiding means for distributing the sublimed dry ice or heated gas within the volume of the storage container, whereby the door closed mode may comprise feeding sublimed dry ice at least partially or only via the guiding means for distributing the sublimed dry ice or heated gas within the volume of the storage container. On the other hand the door open mode may comprise feeding sublimed dry ice or heated gas only via the guiding means for guiding sublimed dry ice or heated gas across the doorway 1804. Examples of the guiding means comprise a fluid line, a nozzle and an element 1202, 1302, 1402, 1502 which is capable of outputting gas and/or controlling gas output e.g. by sound waves.

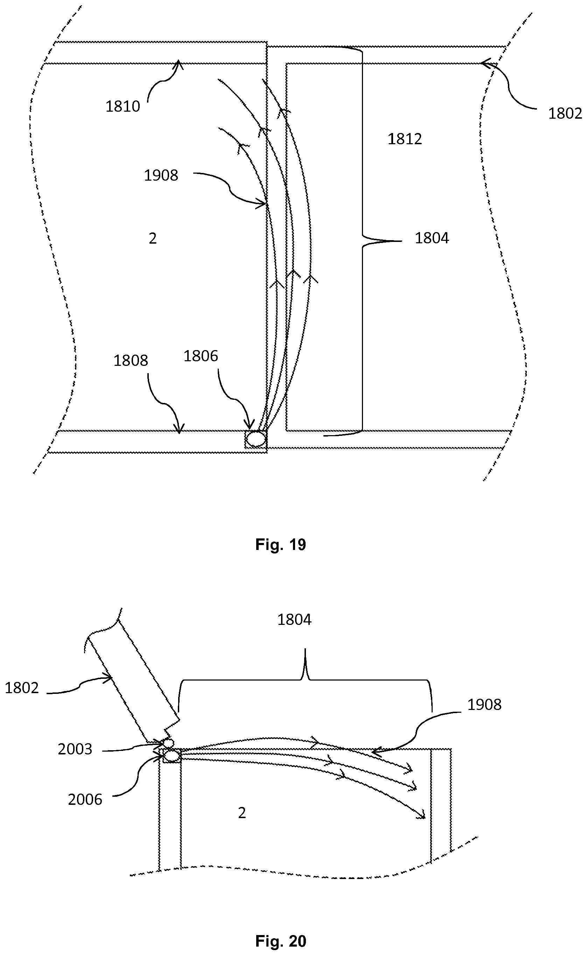

Figure 19 illustrates a temperature regulated apparatus capable of outputting gas across the doorway 1804, when the door 1802 is open. The temperature regulated apparatus may be as described with Figure 18. When the door is open, gas may be output across the doorway guided by guiding means. The guiding means is caused to feed a flow 1908 of gas from one edge 1808 to the opposite edge 1810 of the doorway. The gas flow may serves as a "curtain" that separates the volume of the storage container within the temperature regulated apparatus from the environment of the temperature regulated apparatus. The gas flow prevents the gas within the storage container form leaving the storage container and the gas outside 1812 the storage container from entering the storage container. Since the contents of the storage container is separated from the environment by the gas flow serving as the "curtain ", also the temperature within the storage container may be preserved.

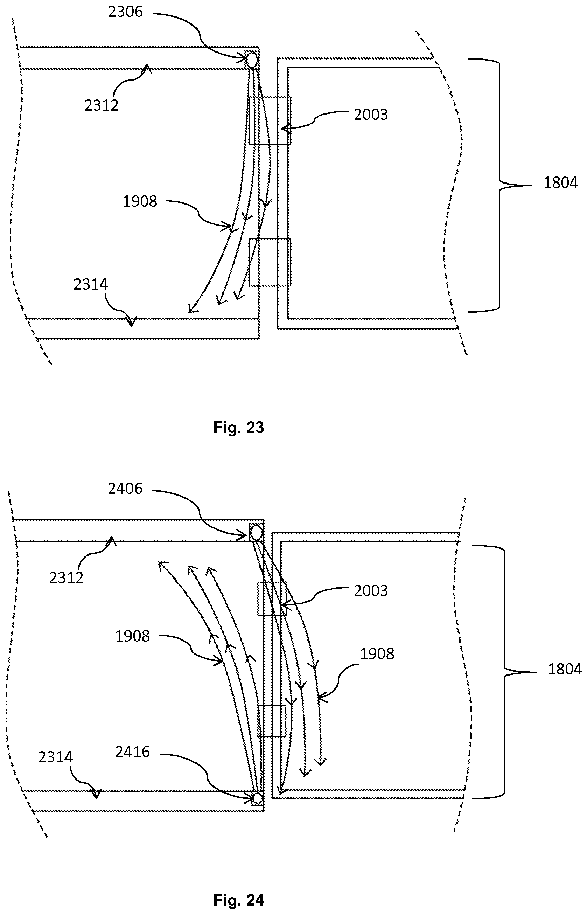

Figures 20, 21, 22, 23 and 24 illustrate example arrangements for outputting gas when a door 2002 is open, according to embodiments. The example arrangements are described with reference to the temperature regulated apparatuses of Figures 18 and 19. Figures 20, 21 and 22 illustrate the temperature regulated apparatus as seen from above, and Figures 23 and 24 illustrate the temperature regulated apparatus as seen from the side.

In Figure 20, guiding means 2006 are arranged to the same side of the doorway 2004 with one or more hinges 2003 that hinge the door 1802 for opening and closing the storage container 2. The guiding means 2006 causes the gas flow 1908 to be directed to the opposite side of the doorway. In this way the hinges and guiding means are arranged on the same side of the doorway which may support robustness of the arrangement against accidentally breaking the guiding means when items are removed from the storage container or items are placed within the storage container.

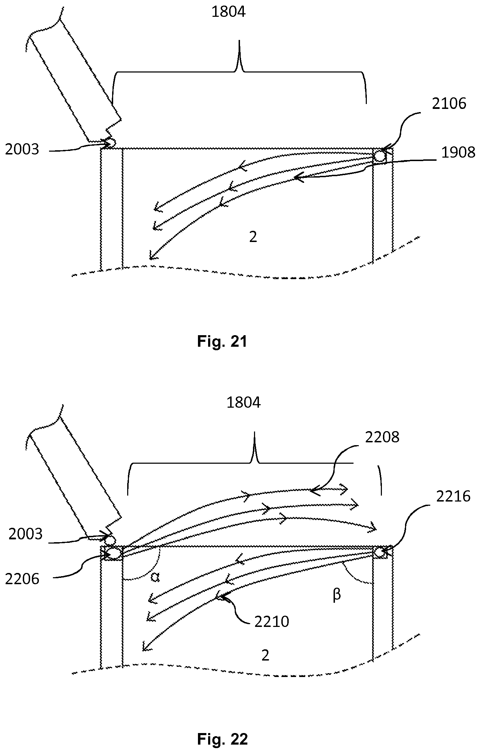

In Figure 21, guiding means 2106 are arranged to the opposite side of the doorway 1804 than one or more hinges 2003 that hinge the door 2002 for opening and closing the storage container 2. The guiding means 2106 causes the gas flow 1908 to be directed to the side of the doorway, where the hinges are located. In this way the door and hinges may serve for guiding the gas flow received form the opposite side of the doorway.

Figure 22 illustrates arrangement, where guiding means 2206 are arranged to the same side with the hinges 2003 similar to described with figure 20 and another guiding means 2216 are arranged to the opposite side of the doorway 1804 than the hinges 2003 similar to described with Figure 21. The guiding means on opposite sides cause gas flows 2208, 2210 in opposite directions and thereby a double protection against gas leaving from within the storage container 2 and for preserving the temperature within the storage container. Moreover, the gas flows 2208, 2210 may be directed such that they form an outer gas flow 2208 and an inner gas flow 2210. The outer gas flow 2208 may be directed with an angle α that opens more outwards from the storage container than the angle β of the inner gas flow 2210. In this way the outer gas flow 2208 may serve as an enclosure for the inner gas flow. Indeed, since the guiding means 2206, 2216 are on opposite sides of the doorway, the outer gas 2208 flow may even be directed wide from the opposite side of the storage container since the inner gas flow 2210 provides protection against gas leaving from within the storage container and for preserving the temperature within the storage container on its own side of the doorway. Moreover, the inner gas flow can in such case be directed directly towards the opposite side or even a bit inwards to the storage container, whereby the collision of gas flows may be prevented and double protection by the gas flows may be obtained.

Figure 23 illustrates example, where guiding means 2306 are arranged to top edge 2312 or bottom edge 2314 of doorway. The door may be hinged one or more hinges 2003 to a side edge of the doorway. The top edge may be preferred for the guiding means over the bottom edge due to a lower pressure of gas needed for the gas flow 1908 to reach the opposite side of the doorway and since arranging the guiding means at the top edge may facilitate keeping the gas flow unblocked by foreign objects.

Figure 24 illustrates example, where guiding means 2406, 2416 are arranged to top edge 2312 and bottom edge 2314 of doorway 2004. The arrangement of Figure 24 may correspond to the arrangement of Figure 23 with a difference that guiding means may be arranged in both the top edge 2312 and bottom edge 2314 of the doorway. In this way guiding means are on opposite sides of the doorway and gas flows 1908 in opposite directions may be caused for obtaining a double protection against gas leaving from within the storage container 2 and for preserving the temperature within the storage container, similar to described with Figure 22. The gas flows from the top to the bottom and to the opposite direction may be guided similar to described with Figure 22. It should be appreciated that the temperature regulated apparatus may have both guiding means according to the arrangement of Figure 22 and according to the Figure 24.

In various embodiments described above, gas such as sublimed dry ice or heated outside air may be conducted to a target volume, e.g. a storage container, for regulating temperature of the target volume container to a target temperature or to a target temperature range. The sublimed dry ice may be obtained from one or more dry ice containers and the heated outside air may be obtained from one or more heat battery packs. The dry ice may flow out of the storage container provided by the pressure within the dry ice container being higher than the pressure within the storage container, the pressure within the enclosure around the dry ice container and/or the pressure within the fluid line. Accordingly, the temperature regulated apparatus according to various embodiments described herein may operate as powered by the sublimation of the dry ice and without further power sources. However, some embodiments may be implemented using magnetic valves, whereby accurate control of the temperature in the storage container and control of the sublimation rate may be obtained.

An apparatus or an arrangement described in an embodiment may comprise a temperature regulated apparatus, a temperature control system, dry-ice based cooling system, a heating system or a transport container capable of adjusting temperature in at least one location within a target volume, and comprise at least one or more elements comprising sound inputs, gas inputs and gas outputs, said gas outputs arranged in a plurality of locations in the target volume;
- at least one temperature measurement device capable of determining a temperature of at least one of the locations;
- a sound wave generator for modifying gas output to the target volume by one or more sound waves fed into the sound inputs;
- a controller connected at least to the temperature measurement device and the sound wave generator to cause: generating one or more sound waves on the basis of the temperature obtained by the temperature measurement device such that the temperature at the location of temperature measurement is caused to decrease or increase towards a target temperature defined for the location.

In various embodiments items and features are described with reference to at least one item and/or feature. Therefore, it is clear that there may be more than one described items and/or features and the description for the at least one item and/or feature applies to each of the one, two, three, four, and at least up to ten items and features.

It will be obvious to a person skilled in the art that, as the technology advances, the inventive concept can be implemented in various ways. The invention and its embodiments are not limited to the examples described above but may vary within the scope of the claims.

## Claims

1. An arrangement for adjusting temperature in at least one location within a target volume (2), comprising:
- one or more elements (1202, 1302) comprising sound inputs (1204, 1304), gas inputs (1206) and gas outputs (1208, 1308), said gas outputs (1208, 1308) arranged in a plurality of locations in the target volume (2);
- at least one temperature measurement device capable of determining a temperature of at least one of the locations;
- a sound wave generator (1210, 1310) for modifying gas output to the target volume by one or more sound waves (1212) fed into the sound inputs (1204, 1304);
- a controller connected at least to the temperature measurement device and the sound wave generator (1210, 1310) to cause: generating one or more sound waves on the basis of the temperature obtained by the temperature measurement device such that the temperature at the location of temperature measurement is caused to decrease or increase towards a target temperature defined for the location.

2. An arrangement according to claim 1, wherein the generated sound wave (1212) that has an amplitude node (1214) at an output (1208, 1308) arranged at the at least one location or the generated sound waves (1212) have a combined amplitude node (1214) at an output arranged at the at least one location.

3. An arrangement according to claim 1 or 2, wherein a sound wave corresponds to a gas output pattern.

4. An arrangement according to any one of the preceding claims, comprising a plurality of temperature measurement devices capable of determining temperatures of a plurality of locations within the target volume and the generated sound wave or sound waves have nodes (1214) at the outputs (1208, 1308) arranged at the locations.

5. An arrangement according to any one of the preceding claims, wherein the elements (1202, 1302) comprise one or more one tubular elements, and the at least one sound wave generator is arranged to one end of the tubular elements and the outputs are arranged in locations along the longitudinal direction of the tubular elements.

6. An arrangement according to any one of the preceding claims, wherein the elements (1202, 1302) comprise one or more planar elements and the outputs are arranged in locations extending in length and width direction on the surfaces of the elements, and the at least one sound wave generator is connected to sides of the planar elements.

7. An arrangement according to any one of the preceding claims, wherein the elements comprise planar elements and the arrangement comprises a plurality of sound wave generators (1210, 1310) that are spatially separated and connected to the sides of different planar elements.

8. An arrangement according to any one of the preceding claims, comprising a battery pack for generating heat and operatively connected to the elements (1202, 1302) for feeding air heated by the battery pack to the target volume (2).

9. An arrangement according to any one of the preceding claims, comprising a temperature regulated apparatus having a dry ice container (3a, 3b, 3c), a storage container forming the target volume (2), and sublimed dry ice is fed from the dry ice container to the storage container for cooling the storage container.

10. An arrangement according to any one of the preceding claims, comprising a storage container forming the target volume, door (1802) arranged at a doorway (1804) of the storage container for accessing goods within the storage container; and at least one of the elements (1202, 1302) have at least one output (1208, 1308) directed across the doorway (1804) such that sound waves generated by the sound wave generator are capable of causing gas output across the doorway (1804) in response to detecting opening of the door (1802).

11. An arrangement according to any of the preceding claims, wherein the target volume (2) in a current temperature is regulated to a target temperature in two phases comprising:
a first phase of convective heat transfer from the storage container to dry ice, or from a battery pack capable of generating heat to the storage container,
and
a second phase of flowing sublimed dry ice or outside air heated by the battery pack to the storage container;
measuring a deviation of the current temperature from the target temperature;
applying the first phase, when the deviation of the current temperature inside the storage container is higher than a threshold value for the deviation; and
applying the second phase, when the deviation of current temperature inside the storage container is less than a threshold value.

## Patentansprüche

1. Anordnung zum Einstellen einer Temperatur in wenigstens einer Position innerhalb eines Zielvolumens (2), wobei die Anordnung Folgendes umfasst:
- ein oder mehrere Elemente (1202, 1302), die Schalleingänge (1204, 1304), Gaseingänge (1206) und Gasausgänge (1208, 1308) umfassen, wobei die Gasausgänge (1208, 1308) in mehreren Positionen in dem Zielvolumen (2) angeordnet sind,
- wenigstens eine Temperaturmesseinrichtung, die dazu in der Lage ist, eine Temperatur wenigstens einer der Positionen zu bestimmen,
- einen Schallwellenerzeuger (1210, 1310) zum Modifizieren einer Gasabgabe an das Zielvolumen durch eine oder mehrere Schallwellen (1212), die in die Schalleingänge (1204, 1304) eingespeist werden,
- eine Steuerung, die wenigstens mit der Temperaturmesseinrichtung und dem Schallwellenerzeuger (1210, 1310) verbunden ist, um Folgendes zu bewirken: Erzeugen einer oder mehrerer Schallwellen auf der Grundlage der durch die Temperaturmesseinrichtung erhaltenen Temperatur, so dass bewirkt wird, dass die Temperatur an der Position der Temperaturmessung zu einer für die Position definierten Zieltemperatur hin abnimmt oder zunimmt.

2. Anordnung nach Anspruch 1, wobei die erzeugte Schallwelle (1212) einen Amplitudenknoten (1214) an einem Ausgang (1208, 1308) aufweist, der an der wenigstens einen Position angeordnet ist, oder die erzeugten Schallwellen (1212) einen kombinierten Amplitudenknoten (1214) an einem Ausgang aufweisen, der an der wenigstens einen Position angeordnet ist.

3. Anordnung nach Anspruch 1 oder 2, wobei eine Schallwelle einem Gasabgabemuster entspricht.

4. Anordnung nach einem der vorhergehenden Ansprüche, die mehrere Temperaturmesseinrichtungen umfasst, die dazu in der Lage sind, Temperaturen mehrerer Positionen innerhalb des Zielvolumens zu bestimmen, und wobei die erzeugte (n) Schallwelle oder Schallwellen Knoten (1214) an den Ausgängen (1208, 1308) aufweisen, die an den Positionen angeordnet sind.

5. Anordnung nach einem der vorhergehenden Ansprüche, wobei die Elemente (1202, 1302) ein oder mehrere röhrenförmige Elemente umfassen und der wenigstens eine Schallwellenerzeuger an einem Ende der röhrenförmigen Elemente angeordnet ist und die Ausgänge in Positionen entlang der Längsrichtung der röhrenförmigen Elemente angeordnet sind.

6. Anordnung nach einem der vorhergehenden Ansprüche, wobei die Elemente (1202, 1302) ein oder mehrere ebene Elemente umfassen und die Ausgänge in Positionen angeordnet sind, die sich in der Längen- und der Breitenrichtung auf den Oberflächen der Elemente erstrecken, und der wenigstens eine Schallwellenerzeuger mit Seiten der ebenen Elemente verbunden ist.

7. Anordnung nach einem der vorhergehenden Ansprüche, wobei die Elemente ebene Elemente umfassen und die Anordnung mehrere Schallwellenerzeuger (1210, 1310) umfasst, die räumlich getrennt und mit den Seiten unterschiedlicher ebener Elemente verbunden sind.

8. Anordnung nach einem der vorhergehenden Ansprüche, die ein Batteriepaket zum Erzeugen von Wärme und wirksam verbunden mit den Elementen (1202, 1302) umfasst, zum Einspeisen von Luft, die durch das Batteriepaket erwärmt ist, in das Zielvolumen (2).

9. Anordnung nach einem der vorhergehenden Ansprüche, die eine temperaturregulierte Vorrichtung umfasst, die einen Trockeneisbehälter (3a, 3b, 3c) aufweist, wobei ein Vorratsbehälter das Zielvolumen (2) bildet und zum Kühlen des Vorratsbehälters sublimiertes Trockeneis aus dem Trockeneisbehälter in den Vorratsbehälter eingespeist wird.

10. Anordnung nach einem der vorhergehenden Ansprüche, die einen Vorratsbehälter umfasst, der das Zielvolumen bildet, wobei eine Tür (1802) an einer Türöffnung (1804) des Vorratsbehälters zum Zugreifen auf Güter innerhalb des Vorratsbehälters angeordnet ist und wenigstens eines der Elemente (1202, 1302) wenigstens einen Ausgang (1208, 1308) aufweist, der derart über die Türöffnung (1804) gerichtet ist, dass Schallwellen, die durch den Schallwellenerzeuger erzeugt werden, dazu in der Lage sind, in Reaktion auf das Erfassen eines Öffnens der Tür (1802) eine Gasabgabe über die Türöffnung (1804) zu bewirken.

11. Anordnung nach einem der vorhergehenden Ansprüche, wobei das Zielvolumen (2) bei einer aktuellen Temperatur in zwei Phasen auf eine Zieltemperatur reguliert wird, die Folgendes umfassen:
eine erste Phase einer Konvektionswärmeübertragung von dem Vorratsbehälter zu Trockeneis oder von einem Batteriepaket, das dazu in der Lage ist, Wärme zu erzeugen, zu dem Vorratsbehälter,
und
eine zweite Phase des Strömenlassens von sublimiertem Trockeneis oder von Außenluft, die durch das Batteriepaket erwärmt ist, zu dem Vorratsbehälter,
Messen einer Abweichung der aktuellen Temperatur von der Zieltemperatur,
Anwenden der ersten Phase, wenn die Abweichung der aktuellen Temperatur innerhalb des Vorratsbehälters höher ist als ein Schwellenwert für die Abweichung, und
Anwenden der zweiten Phase, wenn die Abweichung der aktuellen Temperatur innerhalb des Vorratsbehälters geringer ist als ein Schwellenwert.

## Revendications

1. Agencement pour ajuster la température dans au moins un emplacement à l'intérieur d'un volume cible (2), comprenant :
- un ou plusieurs éléments (1202, 1302) comprenant des entrées sonores (1204, 1304), des entrées gazeuses (1206) et des sorties gazeuses (1208, 1308), lesdites sorties gazeuses (1208, 1308) étant agencées dans une pluralité d'emplacements dans le volume cible (2) ;
- au moins un dispositif de mesure de la température capable de déterminer une température d'au moins un des emplacements ;
- un générateur d'ondes sonores (1210, 1310) pour modifier la sortie gazeuse vers le volume cible d'une ou plusieurs onde(s) sonore(s) (1212) alimentée(s) dans les entrées sonores (1204, 1304) ;
- une commande reliée à au moins le dispositif de mesure de température et au générateur d'ondes sonores (1210, 1310) pour provoquer : la génération d'une ou plusieurs onde(s) sonore (s) en se basant sur la température obtenue par le dispositif de mesure de température de telle façon que la température à l'emplacement de mesure de la température baisse ou augmente vers une température cible définie par l'emplacement.

2. Agencement selon la revendication 1, dans lequel l'onde sonore (1212) générée qui a un nœud d'amplitude (1214) à une sortie (1208, 1308) agencé sur l'au moins un emplacement ou bien les ondes sonores (1212) générées ont un nœud d'amplitude (1214) combiné sur une sortie agencée sur l'au moins un emplacement.

3. Agencement selon la revendication 1 ou 2, dans lequel une onde sonore correspond à un modèle de sortie gazeuse.

4. Agencement selon l'une quelconque des revendications précédentes, comprenant une pluralité de dispositifs de mesure de température capables de déterminer des températures d'une pluralité d'emplacements à l'intérieur du volume cible et la ou les onde(s) sonore(s) générée(s) a/ont des nœuds (1214) sur les sorties (1208, 1308) agencées sur les emplacements.

5. Agencement selon l'une quelconque des revendications précédentes, dans lequel les éléments (1202, 1302) comprennent un ou plusieurs élément(s) tubulaire(s), et l'au moins un générateur d'ondes sonores est agencé à une extrémité des éléments tubulaires et les sorties sont agencées à des emplacements le long de la direction longitudinale des éléments tubulaires.

6. Agencement selon l'une quelconque des revendications précédentes, dans lequel les éléments (1202, 1302) comprennent un ou plusieurs élément(s) planaire(s) et les sorties sont agencées en des emplacements s'étendant dans la direction en longueur et en largeur sur les surfaces des éléments, et l'au moins un générateur d'ondes sonores est relié à des côtés des éléments planaires.

7. Agencement selon l'une quelconque des revendications précédentes, dans lequel les éléments comprennent des éléments planaires et l'agencement comprend une pluralité de générateurs d'ondes sonores (1210, 1310) qui sont spatialement séparés et reliés aux côtés de différents éléments planaires.

8. Agencement selon l'une quelconque des revendications précédentes, comprenant un pack de batteries pour générer de la chaleur et relié de manière opérationnelle aux éléments (1202, 1302) pour alimenter de l'air chauffé par le pack de batteries vers le volume cible (2) .

9. Agencement selon l'une quelconque des revendications précédentes, comprenant un appareil régulé par température ayant un contenant de glace sèche (3a, 3b, 3c), un contenant de stockage formant le volume cible (2), et de la glace sèche sublimée est alimentée du contenant de glace sèche vers le contenant de stockage pour refroidir le contenant de stockage.

10. Agencement selon l'une quelconque des revendications précédentes, comprenant un contenant de stockage formant le volume cible, une porte (1802) agencée à une entrée de porte (1804) du contenant de stockage pour accéder aux marchandises à l'intérieur du contenant de stockage ; et au moins un des éléments (1202, 1302) a au moins une sortie (1208, 1308) dirigée à travers l'entrée de porte (1804) de façon à ce que des ondes sonores générées par le générateur d'ondes sonores soient capables de provoquer une sortie gazeuse à travers l'entrée de porte (1804) en réponse à la détection de l'ouverture de la porte (1802).

11. Agencement selon l'une quelconque des revendications précédentes, dans lequel le volume cible (2) dans une température actuelle est régulé vers une température cible en deux phases, comprenant :
une première phase de transfert de chaleur convective du contenant de stockage en glace sèche, ou d'un pack de batteries capable de générer de la chaleur vers le contenant de stockage,
et
une seconde phase d'écoulement de glace sèche sublimée ou d'air extérieur chauffé par le pack de batteries vers le contenant de stockage ;
de mesurer un écart de la température actuelle par rapport à la température cible ;
d'appliquer la première phase, lorsque l'écart de la température actuelle à l'intérieur du contenant de stockage est supérieure à une valeur seuil pour l'écart ; et
d'appliquer la seconde phase, lorsque l'écart de température actuelle à l'intérieur du contenant de stockage est inférieur à une valeur seuil.
